# EUROPEAN PATENT SPECIFICATION

(11) **EP 3 207 314 B1**
(45) Date of publication and mention of the grant of the patent: **21.07.2021**
(21) Application number: 15804862.9
(22) Date of filing: 14.10.2015
(51) Int. Cl.: F24D 19/10, F24D 17/02, F24D 17/00, F25B 40/04

(54) **METHOD AND SYSTEM FOR HEATING TAP WATER**
VERFAHREN UND SYSTEM ZUM AUFWÄRMEN VON LEITUNGSWASSER
PROCÉDÉ ET SYSTÈME DE CHAUFFAGE D'EAU DU ROBINET

(30) Priority: 15.10.2014 FI 20145904
(43) Date of publication of application: 23.08.2017
(73) Proprietor: Senera Oy, 01380 Vantaa (FI)
(72) Inventor: MANNER, Mika, 02330 Espoo (FI)
(74) Representative: Papula Oy
(86) International application number: PCT/FI2015/050695
(87) International publication number: WO 2016/059297

(56) References cited:
- EP-A1- 0 042 795
- AU-A- 1 358 083
- DE-A1-102009 052 484
- US-A- 5 465 588
- US-A1- 2010 282 435
- None

## Description

### TECHNICAL FIELD

The invention relates to the heating of tap water in buildings, specifically using heat pumps.

### BACKGROUND OF THE INVENTION

Warm tap water is a significant item of energy consumption in different types of buildings, especially residential buildings. On an annual level, it may constitute up to 70 % of all heating energy of the building. It is thus clear that there is a constant need for solutions for saving energy in the heating of tap water in buildings.

In Finland, the temperature of tap water conveyed from a municipal water supply network to a property is typically 5 - 8 °C. The required temperature of warm tap water is normally about 58 °C. This temperature increase of over fifty degrees should be provided in an energy-efficient way.

As different types of heat pumps are becoming more common in the heating systems of buildings, it is clear that it should also be possible to heat tap water with heat pumps. In one known solution, the incoming cold water is conveyed to the lower part of a tap water tank that withstands oxygenous tap water, and the water in the tank is heated by means of a heating coil laid within the tank. Heating water circulates in the heating coil and it is heated with a heat pump. The heated heating water is conveyed to the inlet end of the heating coil in the upper part of the tank, and the cooled heating water that has released heat into the tap water is conveyed from the outlet end of the heating coil in the lower part of the tank back to be heated with heat released by the heat pump. The arrangement may also be inverted, in which case heating water is conveyed to the free space in the tank, and the tap water flows through the tank from the lower part to the upper part thereof within a closed tap water coil. An arrangement of two nested tanks is also known, wherein a tap water tank is surrounded by a heating jacket filled with heating water.

In all of the above-described cases, the heating water is heated with a heat pump a few degrees above the required temperature of warm tap water, for example to approximately 60 °C. As it is known, however, the so-called coefficient of performance that represents the efficiency in heat pumps decreases as the temperature T_{high} of the heat transfer medium heated by the heat pump, i.e. in this context the heating water, increases. In the case of T_{high} = 60 °C, the coefficient of performance may, with regular heat pumps, be for example approximately 2.5. However, heat pumps may in the best case achieve for example a coefficient of performance of 6. This means that in the above-described prior art solutions, the heating of warm tap water is far from being optimal in terms of energy efficiency.

An arrangement is also known wherein, instead of indirect heating, tap water is heated with a CO₂ heat pump directly, i.e. without separate heating water. The incoming cold tap water is conveyed through a heat exchanger in connection with the condenser of the heat pump, so that the tap water heats up. Carbon dioxide as a refrigerant in the heat pump allows the required temperature difference of ΔT = 50 °C to be achieved with a higher coefficient of performance than by traditional refrigerants, even with a coefficient of performance of 4. However, carbon dioxide is in technical terms a difficult refrigerant, for example because high pressure levels are required.

US 2010/0282435 A1 discloses an air-conditioning hot-water supply complex system that can simultaneously process a cooling load, a heating load, and a high-temperature hot-water supply load to provide a stable heat source all through the year.

### SUMMARY OF THE INVENTION

The objective of the invention is to provide a new energy-efficient method and system for heating tap water based on the use of a heat pump, which method and system are feasible to be implemented with regular components and regular pressure levels.

In one aspect, the invention relates to a method for heating the tap water of a building from a first temperature T₁ to a second temperature T₂, comprising a heating step wherein incoming tap water is heated with condensation heat released by a heat pump into heating water at its condenser, and the tap water which has been heated this way is conveyed into a tap water tank to be conveyed further for use. In the method of the invention, incoming tap water is in other words heated with heat released by the heat pump at its condenser into separate heating water that functions as a mediating medium for heat transfer. Thus, in the method of the invention the tap water to be heated is separated from the heat pump by means of the heating water. This ensures that the refrigerant of the heat pump under no conditions will be able to be directly mixed with tap water.

The first temperature T₁ may be for example the temperature of cold water as it is supplied from the municipal or regional supply pipe to the water pipe network of the building, for example in Finland typically 5 - 8 °C. However, it may as well be any other base temperature from which the temperature of tap water needs to be increased. The second temperature T₂ may be for example the minimum temperature of hot tap water needed in the building, for example approximately 58 - 63 °C. In any case, the advantages of the invention are most noticeable when the targeted temperature increase T₂ - T₁ is tens of degrees, for example at least 30 degrees.

The heating of tap water with the heat released by the heat pump into the heating water at its condenser can in practice be carried out for example by circulating the heating water between the condenser of the heat pump and a separate heat exchanger and by conveying the incoming tap water to said heat exchanger so that the heating water releases the heat it absorbed at the condenser further into the tap water at the heat exchanger.

According to the invention, tap water is heated with the heat pump in said heating step in the method in such a way that the temperature increase ΔT provided between heated and incoming tap water only corresponds to a part of the targeted total temperature difference T₂ - T₁, and said heating step is repeated by using, as incoming tap water, the tap water that has been heated in a previous heating step and that is conveyed from the lower part of the tap water tank, and by conveying back the tap water that has been reheated this way to the upper part of the tap water tank so as to layer the reheated tap water on top of the tap water that has been heated in a previous heating step, until substantially the whole water volume contained in the tap water tank is reheated tap water.

In other words, tap water is not heated in the method of the invention all at once in a single heating step for example from the temperature of 5 - 8 °C of the incoming cold tap water drawn from the water pipe network to the required temperature of warm tap water of about 60 °C. Instead, in the heating step a heat pump is used for heating the tap water, which heat pump is configured to release into the heating water and to be released further into tap water a heat quantity that heats the tap water with a temperature increase that only corresponds to a part of the total targeted temperature increase. In the next step, the tap water that has already been heated is reheated with the same heat quantity. The required temperature increase of for example about 50 degrees in total is provided by continually repeating the heating step until, after the last heating step, the temperature of the tap water conveyed to the tap water tank has reached the desired temperature T₂.

In other words, in the method according to the invention the heating of tap water is carried out in steps by circulating heated tap water continually back to be heated with the heat released by the heat pump at its condenser, until the temperature of the tap water has reached a desired level, for example approximately 60 °C.

"Incoming tap water" simply means, in the context of the invention, tap water that is being heated in each heating step. In the first heating step, it may be tap water as it is supplied to the building from the supply water pipe, or tap water that has first been conveyed unheated into the tap water tank. In subsequent heating steps, "incoming tap water" is tap water that has previously been heated in one or more heating steps.

Stepwise heating provides the valuable advantage that the heat pump can be used more efficiently, in other words with a better coefficient of performance, than by providing the whole required temperature increase T₂ - T₁ all at once in a single heating step. Although the temperature of the condenser and the temperature of the heating water supplied to the condenser increase after each heating step and thus the coefficient of performance gradually decreases, the stepwise heating according to the invention provides at the best a significantly higher total coefficient of performance than single-step heating. This is due to the fact that, although the temperature eventually has to be increased to about 60 °C, the coefficient of performance at least in the first heating steps is clearly higher than what it would be if the temperature of the tap water was increased all at once for example from 5 °C to 60 °C. In the first heating step, the coefficient of performance may be for example approximately 6, from which it decreases step after step as the condensation temperature of the heat pump increases, and in the last heating step it may be for example 2.5. The total coefficient of performance for the heating will in this case be more or less an average of the above-mentioned values, i.e. slightly over 4. Thus, the invention provides a high total coefficient of performance for the heating using regular heat pump refrigerants so as to avoid technical difficulties relating for example to the CO₂ technology.

Preferably, the temperature increase ΔT provided in a heating step is 6 - 10 °C, most preferably approximately 8°C. A temperature increase that is optimal in terms of the coefficient of performance depends e.g. on the refrigerant of the heat pump, but this degree of temperature increase is normally provided by heat pumps with the highest coefficient of performance at all temperatures of the condenser.

In addition to stepwise heating in the method according to the invention, when conveying warm tap water for use from the tap water tank, it is further heated with hot water, which is heated with heat released by the hot gas of a heat pump, to ensure sufficiently high temperature of the tap water conveyed for use. This can be carried out for example by conveying the tap water through a hot water volume that retains heat, the water of the hot water volume being heated with the heat released by the hot gas of the heat pump.

For example in cases where tap water is not sufficiently heated with stepwise heating before being conveyed for use, a sufficiently high final temperature of the tap water can thus be ensured by post-heating the tap water with hot water. Besides, the required temperature of over 60 degrees is not necessarily even reached with all of the most commonly used refrigerants. The heat quantity of the temperature increase for the last few degrees as required can this way be provided for the tap water by means of the hot gas. Post-heating can also be used to compensate for possible heat losses produced in the circulation of warm tap water. The hot water volume provided for example in the form of a hot water boiler can be large enough to yield a heat quantity that is sufficient to satisfy the requirement of additional heating of the tap water in the above-described special cases.

It is an essential feature of the invention that the hot water is heated with heat released by the hot gas of the heat pump, i.e. a high-temperature gas that is pressurized by the compressor. This can in practice be carried out with a hot gas heat exchanger provided in connection with the heat pump. When heat is extracted from hot gas it provides the advantage of obtaining heat energy at a high temperature without having to use the compressor to raise the pressure and temperature of the condenser to an unnecessarily high level, which would reduce the efficiency/coefficient of performance of the heat pump. The same heat pump may thus release heat both at its condenser due to the phase transition of the refrigerant at one temperature, and at the hot gas heat exchanger as the refrigerant cools down at a substantially higher temperature than the temperature at the condenser.

Only a limited heat quantity is obtainable from the hot gas. However, the heat quantity required in the cases described above, for example in compensating for the heat loss produced in the circulation of warm tap water is just a small part, for example about 1/5 of the total heat quantity required for heating tap water. The heat typically obtainable from hot gas is quite sufficient. Thus, the heating power obtainable from the heat pump at the condenser and at the hot gas heat exchanger corresponds with the heat quantities required at these two heating stages.

In summary, it can thus be concluded that the combination of post-heating based on the heat released by the hot gas and of the stepwise primary heating provides sufficient temperature for tap water with an extremely good overall coefficient of performance.

Advantages are also gained with the invention in comparison to the heating of tap water by the heat released by hot gas alone, the major part of the heat produced by the heat pump being used for heating the building. A combination of the two modes of heating where all of the heat energy produced by the heat pump is used for heating tap water ensures that energy is supplied to a sufficient degree for heating tap water even outside the actual heating season.

In one embodiment of the invention, warm tap water that has been heated with the hot water is circulated to a tap water usage point and back to be heated with the hot water to ensure quick supply of warm tap water for use. In this embodiment, the advantages provided by stepwise heating and post-heating together are especially obvious. The circulation of warm tap water always results in some heat loss as heat is conducted from the tap water pipework to the surrounding air and structures. This heat loss can be compensated for by post-heating tap water with the hot water, for example by conveying warm tap water that flows back from a usage point through a hot water volume that has been heated to a suitable temperature.

Any type of heat pump, i.e. any heat pump that provides heat from any heat source to a higher temperature, can be applied in the method of the invention. However, the heat pump is in a preferred embodiment of the invention a ground source heat pump that transfers heat from the ground.

The same heat pump is most preferably used in the stepwise heating and post-heating. In other words, in the method it is possible to use one and the same heat pump, its hot gas heat exchanger heating the water of the warm water volume and its condenser heating the heating water for use in the stepwise heating. When the stepwise heating is not in progress, it is possible to use the condenser for heating water to be conveyed to the heating network of the building, for example to the radiator or floor heating pipework.

In the method of the invention, the tap water tank used is most suitably a tank with the inner diameter of the horizontal cross section of no more than approximately 800 mm, most preferably no more than approximately 500 mm, and a volume of approximately 300 - 1000 liters. The tank may be for example a cylindrical, vertically installed tank. Said dimensions ensure that when conveying heated tap water to the upper part of the tank, the tap water already present in the tank and the heated tap water conveyed therein are kept in overlying layers without being substantially mixed, so that it is possible to fill the whole tank with equally warm tap water that has been heated in each heating step.

To ensure continuous supply of warm tap water, it is possible in the method to provide warm tap water into two different tap water tanks one after the other. In other words, in this embodiment the water of one tap water tank is first heated in steps to the desired temperature T₂, after which the heating of tap water for the other tap water tank can be started while the first tank functions in this case as a storage of warm tap water. Due to the combination of the two modes of heating according to the invention, where all of the heat energy produced by the heat pump can be used for heating tap water, the volumes of the tap water tanks can be kept reasonable as the water volume of one tap water tank can be heated relatively quickly.

In the method according to the invention, the one or more heat pumps and the flows of tap water can be controlled with means known per se. For example, the flows can be regulated and controlled as desired with different valves, flow controllers, pumps and other operating elements or actuators. For controlling, it is possible to use pressure, temperature and flow measuring devices provided at suitable positions. The assembly formed by the operating elements and heat pumps used in the method can be controlled in a centralized manner with one or more control units comprising a memory and a processor as well as a program stored in the memory, for example with a computer, wherein the processor, as it runs the program, produces control signals to set operations according to the method steps for the actuators and for the heat pump.

The invention has been discussed above from the aspect of the method according to the invention. According to a second aspect, the invention relates to a system for heating tap water of a building from a first temperature T₁ to a second temperature T₂. What is described in connection with the method above concerning the basic principles, details, preferred embodiments and advantages of the invention, also applies, mutatis mutan-dis, to the system discussed below. This is equally applicable vice versa.

The system of the invention comprises a heat pump, a heating water circulation, a heat exchanger, a tap water pipework and a tap water tank. Said elements are arranged to heat incoming tap water at the heat exchanger with condensation heat released by the heat pump into heating water at its condenser and to convey the tap water which has been heated this way into the tap water tank to be conveyed further for use.

The heating water circulation refers to the circulation of the heating water, which functions as a heat transfer medium between the heat pump and the tap water, between the condenser of the heat pump and the heat exchanger so that the heating water receives heat from the refrigerant of the heat pump at the condenser of the heat pump and releases it further into the tap water at the heat exchanger.

The tap water pipework may comprise, in addition to the flow pipes, any valves, controllers, pumps and other operating elements and actuators as known per se, which are required for said operation of the system.

According to the invention, the heat pump is arranged to operate in such a way that the temperature increase ΔT provided between heated and incoming tap water only corresponds to a part of the targeted total temperature difference T₂ - T₁, the system being arranged to repeat said incoming tap water heating step using, as incoming tap water, the tap water that has already been heated and that is conveyed from the lower part of the tap water tank, and by conveying back the tap water that has been reheated this way to the upper part of the tap water tank so as to layer the reheated tap water on top of the tap water that has been heated in a previous heating step, until substantially the whole water volume contained in the tap water tank is reheated tap water. The system is further according to the invention arranged to continually repeat said heating step, until the desired temperature T₂ of the tap water has been reached.

As stated above in connection with the method, the operation of the system is based on the stepwise heating of tap water contained in the tap water tank with successive heating steps so that, in each heating step, the temperature of the tap water is increased in an amount that only corresponds to a part of the desired total temperature increase.

The temperature increase ΔT provided in a heating step is 6 - 10 °C, preferably approximately 8°C.

The system according to the invention further comprises a hot water channel network as well as a hot gas heat exchanger of the heat pump connected to each other for heating hot water with heat released by the hot gas heat exchanger, the tap water pipework being arranged to convey the tap water to be conveyed for use from the tap water tank into heat transfer communication with the hot water so as to ensure sufficiently high temperature of the tap water that is conveyed for use.

The hot water channel network may be a closed circulation according to the prior art, circulating hot water to the hot gas heat exchanger and back into heat transfer communication with tap water. In practice, the hot water channel network may comprise for example a hot water boiler through which the tap water pipework is laid to heat tap water with the hot water.

In one preferred embodiment, the tap water pipework is arranged to circulate warm tap water to a tap water usage point and back into heat transfer communication with hot water to ensure quick supply of warm tap water for use through the taps of the building. In the case where the system comprises a hot water boiler, this warm tap water circulation can be arranged to circulate warm tap water between the hot water boiler and the tap water usage point.

The heat pump provided in the system may be a ground source heat pump.

Preferably, the hot gas heat exchanger is connected to the same heat pump as the condenser that releases heat into the heating water.

To ensure proper and unmixable layering of the incoming tap water that is conveyed from the tap water tank to be heated and of the heated tap water that is returned to the tank, the inner diameter of the horizontal cross section of the tap water tank is no more than approximately 800 mm, most preferably no more than approximately 500 mm, and its volume is approximately 300 - 1000 liters.

In one preferred embodiment of the invention, the system comprises two tap water tanks for providing warm tap water into two different tap water tanks one after the other.

The assembly formed by the operating elements and heat pumps used in the method and in the system can be controlled in a centralized manner with one or more control units comprising a memory and a processor as well as a computer program stored in the memory, for example with a computer, wherein the processor, as it runs the program, produces control signals to set operations according to the method steps for the actuators and for the heat pumps. The concepts of a "processor" and a "computer" must in this context be understood in a broad sense without limiting their content to any specific type of apparatus. As an example, the "computer program" may mean for instance embedded software of a microcontroller.

### DETAILED DESCRIPTION OF THE INVENTION

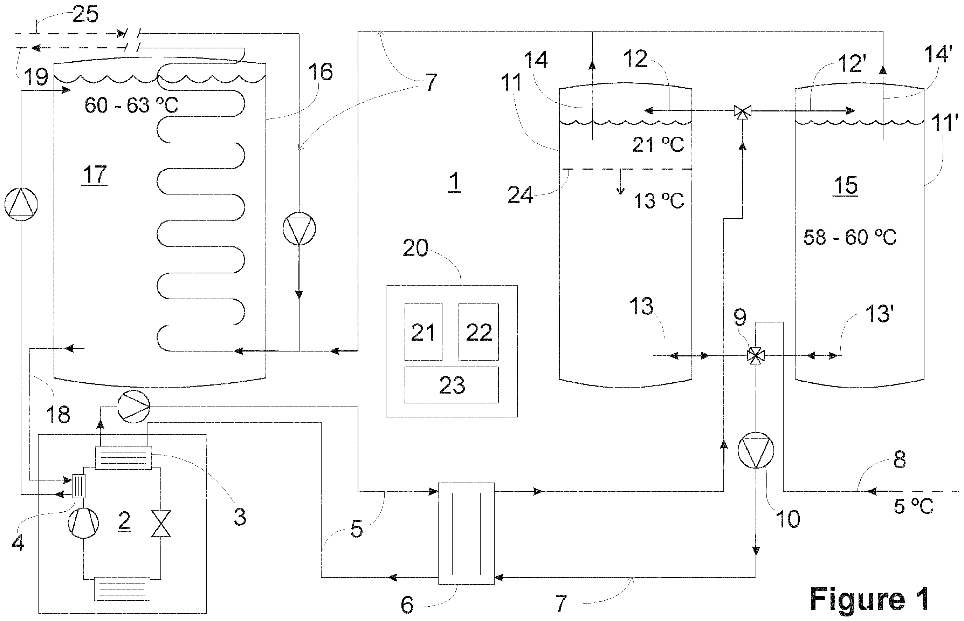

Below, the invention will be described with reference to the accompanying Fig. 1 providing an example of the embodiments of the invention. Fig. 1 is a diagram representing the system according to the invention, and also illustrates the method according to the invention.

The heating apparatus of the system 1 of Fig. 1 is a ground source heat pump 2 that transfers heat from the ground (the heat recovery pipework not shown in the figure) to a refrigerant circuit and further to be released at a hot gas heat exchanger 4 and at a condenser 3. In heat transfer communication with the condenser there is a heating water circulation 5 which is further connected to a heat exchanger 6 for releasing the heat, which has been released by the ground source heat pump into the heating water, further into the tap water to be heated. The system comprises a tap water pipework 7 with multiple parts and branches which, in addition to a supply line 8 that supplies cold tap water from the supply network, comprises a number of pipes as well as valves 9 and pumps 10.

The system also comprises two substantially cylindrical vertical tap water tanks 11, 11' with a capacity of approximately 300 - 1000 1 and a diameter of approximately 500 mm.

The upper part of each tap water tank is provided with an inlet connection 12, 12'. Also, the lower part of each tap water tank has an inlet/outlet connection 13, 13' through which tap water can be conveyed into the tap water tank, or from the tank to the heat exchanger and further back from the heat exchanger into either one of the tap water tanks through the inlet connection 12, 12'. The tap water pipework is arranged to convey through the inlet/outlet connection 13, 13', under control of a valve 9, the cold incoming tap water supplied from the supply line 8 to the lower part of either one of the tap water tanks.

The position of the inlet and outlet connections may differ from those shown in Fig. 1. The essential feature is that they are positioned in the "upper" and "lower" parts of the tap water tanks in the sense that the positions allow the supply of warmer tap water into the tank on top of the cooler tap water that is present in the tank and, on the other hand, the discharge of cooler tap water at the same time while keeping the tap water masses of different temperatures substantially unmixed and layered.

Furthermore, each tap water tank is provided with an outlet pipe 14, 14' through which tap water 15 can be conveyed from the tank to tap water usage points 25. The tap water pipework conveys the tap water for use through a separate hot water boiler 16. The hot water boiler is provided with a hot water 17 circulation system 18, by means of which the water of the hot water boiler can be circulated to the hot gas heat exchanger 4 of the ground source heat pump 2 and back to the hot water boiler for heating tap water with the heat released by the hot gas of the heat pump into the hot water.

As an alternative to conveying the tap water through the hot water volume 17 contained in the hot water boiler 16, it is possible to convey hot water from the hot water boiler to an external heat exchanger (not shown in the figure), and to convey the tap water via this heat exchanger. In other words, in this alternative tap water is additionally heated at said heat exchanger outside the hot water boiler. However, also in this alternative the source of additional heat is the hot gas heat exchanger 4 of the heat pump.

The tap water pipework comprises a warm tap water circulation pipework 19 for circulating warm tap water between the usage points 25 and the hot water boiler.

The whole system 1 is controlled with a control unit 20 comprising a processor 21 and a memory 22 coupled to a suitable control circuit 23. The memory may also be integrated with the processor. The memory stores a program which, as it is run on the processor, produces control commands for the actuators of the system to operate the system according to the method as desired.

The basic principle of operation of the system of Fig. 1 is to heat tap water in steps from the temperature T₁ of incoming water to the target temperature T₂ of warm tap water. In the example illustrated in the figure, the temperature T₁ of cold tap water from the supply network is 5 °C, and the temperature T₂ required of the warm tap water is 58 - 60 °C. The system is configured for first heating and filling one tap water tank 11, 11' with the heated tap water, after which this tank functions as a warm tap water storage, and then heating the water of the other tank 11', 11. By heating two tanks one after the other, it is ensured that one tank is constantly ready as a warm tap water storage.

The tap water is conveyed for use through the outlet pipe 14, 14' from either one of the tap water tanks. Before the actual usage points, the water is conveyed through a hot water boiler 16 containing hot water 17 at about 60 - 80 degrees to ensure that the tap water conveyed to the usage points is sufficiently warm.

Fig. 1 illustrates a situation where the tap water tank 11' on the right in the figure has already been filled with warm tap water at 58 - 60 degrees and functions as a storage from which tap water is conveyed for use. The tap water of the tap water tank 11 on the left in the figure is being heated in steps.

The tap water tank 11 has first been filled one time with heated tap water at a temperature raised for approximately eight degrees, which is optimal in terms of the operation of the heat pump, from the five degrees of the water supply network up to 13 degrees. In effect, the operation of the heat pump is controlled in such a way as to provide every time the same temperature increase of 8 degrees for the tap water that eventually reaches the heat exchanger 6. In the situation illustrated in the figure, water at 13 degrees is conveyed from the lower part of the tap water tank to the heat exchanger 2, where it heats up for another eight degrees up to 21 degrees due to the heat released by the heat pump 3, after which the heated water is conveyed back to the upper part of the tank. The tap water stays substantially layered at two different temperatures in the tank under the effect of gravity. When supplying tap water that has been heated in the second heating step to the upper part of the tank, the interface 24 between the two different temperatures moves down in the tank, until the whole tank is filled with water at 21 degrees. The heating step is then repeated. This is continued until the tap water has reached the desired final temperature, which is 58 - 60 °C in this example.

The heat losses produced with the circulation of warm tap water in the circulation pipework 19 are compensated for with additional heat which is provided to the tap water from the water 17 contained in the hot water boiler. The hot water boiler is sized large enough, with a volume of, for example, approximately 1000 1, that the heat quantity it contains is under all circumstances sufficient to meet the need for additional heating of the tap water. As to the water 17 of the hot water boiler, it is heated at the hot gas heat exchanger 4 of the same ground source heat pump, the ground source heat pump which releases at its condenser into the heating water circulation 5 the heat energy required for stepwise heating of the tap water.

It should be noted that the invention is not limited merely to the above-described example illustrated in Fig. 1; instead, the embodiments of the invention may vary within the scope of the claims. For example, in additional heating of the tap water it is possible to use, instead of the hot water boiler 16 and the tap water pipework 7 laid therethrough, an inverted solution in which the tap water is conveyed into an intermediate tank adapted for oxygenous tap water, through which tank is provided the circulation of hot water that is heated with the hot water heat exchanger.

## Claims

1. A method for heating tap water (15) of a building from a first temperature T₁ to a second temperature T₂, comprising a heating step wherein incoming tap water is heated with condensation heat released by a heat pump (2) into heating water (5) at its condenser (3), and the tap water which has been heated this way is conveyed into a tap water tank (11) to be conveyed further for use, wherein
- tap water is heated in said heating step with the heat pump in such a way that the temperature increase ΔT provided between heated and incoming tap water only corresponds to a part of the targeted total temperature difference T₂ - T₁,
- said heating step is repeated using, as incoming tap water, the tap water that has already been heated in a previous heating step and that is conveyed from the lower part of the tap water tank (11), and by conveying back the tap water that has been reheated this way to the upper part of the tap water tank so as to layer the reheated tap water on top of the tap water that has been heated in a previous heating step, until substantially the whole water volume contained in the tap water tank is reheated tap water,
- said heating step is continually repeated until the desired temperature T₂ of tap water has been reached, and **characterized in that**
- when conveying tap water for use from the tap water tank, it is heated with hot water, which is heated with heat released by hot gas (4) of a heat pump, to ensure sufficiently high temperature of the tap water conveyed for use; wherein incoming tap water (15) and heating water (17) may be heated with the same heat pump.

2. The method according to claim 1, wherein the temperature increase ΔT provided in a heating step is 6 - 10 °C, preferably approximately 8 °C.

3. The method according to claim 1 or 2, wherein warm tap water that has been heated with the hot water is circulated to a tap water usage point (25) and back to be heated with the hot water to ensure quick supply of warm tap water for use.

4. The method according to any one of claims 1 - 3, wherein a ground source heat pump (2) is used as the heat pump.

5. The method according to any one of claims 1 - 4, wherein the tap water tank used is a tank (11) with the inner diameter of the horizontal cross section of no more than approximately 800 mm, most preferably no more than approximately 500 mm, and a volume of approximately 300 - 1000 liters.

6. The method according to any one of claims 1 - 5, wherein warm tap water is provided by the method into two different tap water tanks (11, 11') one after the other.

7. A system (1) for heating tap water (15) of a building from a first temperature T₁ to a second temperature T₂, the system comprising a heat pump (2), a heating water circulation (19), a heat exchanger (6), a tap water pipework (7) and a tap water tank (11), arranged to heat incoming tap water at the heat exchanger with condensation heat released by the heat pump into heating water (5) at its condenser (3), and to convey the tap water which has been heated this way into the tap water tank to be conveyed further for use, wherein
- the heat pump (2) is arranged to operate in such a way that the temperature increase ΔT provided between heated and incoming tap water only corresponds to a part of the targeted total temperature difference T₂ - T₁,
- the system is arranged to repeat said incoming tap water heating step using, as incoming tap water, the tap water that has already been heated and that is conveyed from the lower part of the tap water tank (11), and by conveying back the tap water that has been reheated this way to the upper part of the tap water tank so as to layer the reheated tap water on top of the tap water that has been heated in a previous heating step, until substantially the whole water volume contained in the tap water tank is reheated tap water,
- the system being arranged to continually repeat said heating step until the desired temperature T₂ of tap water has been reached, and that
- the system further comprises a hot water channel network (18) and a hot gas heat exchanger (4) of a heat pump connected to each other for heating hot water (17) with heat released by the hot gas heat exchanger, the tap water pipework (7) being arranged to convey the tap water to be conveyed for use from the tap water tank into heat transfer communication with the hot water (17), to ensure sufficiently high temperature of the tap water conveyed for use; wherein the hot gas heat exchanger (4) may be connected to the same heat pump (2) as the condenser (3) that releases heat into the heating water.

8. The system (1) according to claim 7, wherein the temperature increase ΔT provided in a heating step is 6 - 10 °C, preferably approximately 8 °C.

9. The system (1) according to claim 7 or 8, wherein the tap water pipework (7, 19) is arranged to circulate warm tap water to a tap water usage point (25) and back into heat transfer communication with the hot water (17) to ensure quick supply of warm tap water for use.

10. The system (1) according to any one of claims 7 - 9, wherein the heat pump is a ground source heat pump (2) .

11. The system (1) according to any one of claims 7 - 10, wherein the inner diameter of the horizontal cross section of the tap water tank (11) is no more than approximately 800 mm, most preferably no more than approximately 500 mm, and its volume is approximately 300 - 1000 liters.

12. The system (1) according to any one of claims 7 - 11, comprising two tap water tanks (11, 11') for providing warm tap water into two different tap water tanks one after the other.

## Patentansprüche

1. Verfahren zum Erwärmen von Leitungswasser (15) eines Gebäudes von einer ersten Temperatur T₁ auf eine zweite Temperatur T₂, umfassend einen Heizschritt, wobei einlaufendes Leitungswasser mit Kondensationswärme erwärmt wird, die von einer Wärmepumpe (2) in Heizwasser (5) an seinem Kondensator (3) freigesetzt wird, und das auf diese Weise erwärmte Leitungswasser in einen Leitungswassertank (11) geleitet wird, um zur Verwendung weiter befördert zu werden, wobei
- das Leitungswasser in dem besagten Heizschritt mit der Wärmepumpe so erwärmt wird, dass die zwischen erwärmtem und einströmendem Leitungswasser vorgesehene Temperaturerhöhung ΔT nur einem Teil der angestrebten Temperaturdifferenz T₂ - T₁ entspricht,
- der besagte Heizschritt wiederholt wird, wobei als einlaufendes Leitungswasser das Leitungswasser verwendet wird, das bereits in einem vorhergehenden Heizschritt erwärmt wurde und das aus dem unteren Teil des Leitungswassertanks (11) befördert wird, und indem das Leitungswasser, das auf diese Weise wieder erwärmt wurde, zum oberen Teil des Leitungswassertanks zurückbefördert wird, so dass das wiedererwärmte Leitungswasser auf das Leitungswasser, das in einem vorherigen Heizschritt erwärmt wurde, geschichtet wird, bis im Wesentlichen das gesamte im Leitungswassertank enthaltene Wasservolumen wiedererwärmtes Leitungswasser ist,
- der besagte Heizschritt kontinuierlich wiederholt wird, bis die gewünschte Temperatur T₂ des Leitungswassers erreicht ist, und **dadurch gekennzeichnet, dass**
- wenn Leitungswasser zur Verwendung aus dem Leitungswassertank gefördert wird, es mit heißem Wasser erwärmt wird, welches mit der vom heißen Gas (4) einer Wärmepumpe freigesetzten Wärme erwärmt wird, um eine ausreichend hohe Temperatur des zur Verwendung geförderten Leitungswassers zu gewährleisten; wobei einlaufendes Leitungswasser (15) und Heizwasser (17) mit derselben Wärmepumpe erwärmt werden können.

2. Verfahren nach Anspruch 1, wobei der in einem Heizschritt vorgesehene Temperaturanstieg ΔT 6 - 10 °C, vorzugsweise etwa 8 °C, beträgt.

3. Verfahren nach Anspruch 1 oder 2, wobei warmes Leitungswasser, das mit dem Warmwasser erwärmt wurde, zu einer Leitungswassernutzungsstelle (25) und zurück zirkuliert wird, um mit dem Warmwasser erwärmt zu werden, um eine schnelle Versorgung mit warmem Leitungswasser zur Verwendung sicherzustellen.

4. Verfahren nach einem der Ansprüche 1 - 3, wobei eine Erdwärmepumpe (2) als Wärmepumpe verwendet wird.

5. Verfahren nach einem der Ansprüche 1 - 4, wobei als Leitungswassertank ein Tank (11) mit einem Innendurchmesser des horizontalen Querschnitts von nicht mehr als etwa 800 mm, vorzugsweise nicht mehr als etwa 500 mm, und einem Volumen von etwa 300 - 1000 Litern verwendet wird.

6. Verfahren nach einem der Ansprüche 1 - 5, wobei durch das Verfahren warmes Leitungswasser nacheinander in zwei verschiedene Leitungswassertanks (11, 11') geleitet wird.

7. System (1) zum Erwärmen von Leitungswasser (15) eines Gebäudes von einer ersten Temperatur T₁ auf eine zweite Temperatur T₂, wobei das System eine Wärmepumpe (2), einen Heizwasserkreislauf (19), einen Wärmetauscher (6), eine Leitungswasser-Rohrleitung (7) und einen Leitungswassertank (11) umfasst, angeordnet, um am Wärmetauscher einlaufendes Leitungswasser mit Kondensationswärme zu erwärmen, die von der Wärmepumpe in Heizwasser (5) an seinem Kondensator (3) freigesetzt wird, und um das auf diese Weise erwärmte Leitungswasser in den Leitungswassertank zu befördern, um zur Verwendung weiter befördert zu werden, wobei
- die Wärmepumpe (2) angeordnet ist, in solch einer Weise zu arbeiten, dass die zwischen erwärmtem und einlaufendem Leitungswasser vorgesehene Temperaturerhöhung ΔT nur einem Teil der angestrebten Gesamttemperaturdifferenz T₂ - T₁ entspricht,
- das System angeordnet ist, den besagten Heizschritt des einlaufenden Leitungswassers zu wiederholen, wobei als einlaufendes Leitungswasser das Leitungswasser verwendet wird, das bereits erhitzt wurde und das aus dem unteren Teil des Leitungswassertanks (11) befördert wird, und indem das Leitungswasser, das auf diese Weise wieder erhitzt wurde, zum oberen Teil des Leitungswassertanks zurückbefördert wird, so dass das wiedererwärmte Leitungswasser auf das Leitungswasser, das in einem vorherigen Heizschritt erwärmt wurde, geschichtet wird, bis im Wesentlichen das gesamte im Leitungswassertank enthaltene Wasservolumen wiedererwärmtes Leitungswasser ist,
- das System angeordnet ist, den Heizschritt kontinuierlich zu wiederholen, bis die gewünschte Temperatur T₂ des Leitungswassers erreicht ist,
und
- das System ferner ein Heißwasser-Kanalnetz (18) und einen Heißgas-Wärmetauscher (4) einer Wärmepumpe umfasst, die miteinander verbunden sind, um Heizwasser (17) mit Wärme zu erwärmen, die von dem Heißgas-Wärmetauscher freigesetzt wird, wobei die Leitungswasser-Rohrleitung (7) angeordnet ist, das zur Verwendung zu befördernde Leitungswasser aus dem Leitungswassertank in Wärmeübertragungsverbindung mit dem Heizwasser (17) zu befördern, um eine ausreichend hohe Temperatur des zur Verwendung beförderten Leitungswassers sicherzustellen; wobei der Heißgas-Wärmetauscher (4) an dieselbe Wärmepumpe (2) angeschlossen sein kann wie der Kondensator, der Wärme an das Heizwasser abgibt.

8. System (1) nach Anspruch 7, wobei die in einem Heizschritt vorgesehene Temperaturerhöhung ΔT 6-10 °C, vorzugsweise etwa 8 °C, beträgt.

9. System (1) nach Anspruch 7 oder 8, wobei die Leitungswasser-Rohrleitung (7, 19) angeordnet ist, warmes Leitungswasser zu einer Leitungswassernutzungsstelle (25) und zurück in Wärmeübertragungsverbindung mit dem Heizwasser (17) zu zirkulieren, um eine schnelle Versorgung mit warmem Leitungswasser zur Verwendung zu gewährleisten.

10. System (1) nach einem der Ansprüche 7 - 9, wobei die Wärmepumpe eine Erdwärmepumpe (2) ist.

11. System (1) nach einem der Ansprüche 7 - 10, wobei der Innendurchmesser des horizontalen Querschnitts des Leitungswassertanks (11) nicht mehr als etwa 800 mm, vorzugsweise nicht mehr als etwa 500 mm, und sein Volumen etwa 300 - 1000 Liter beträgt.

12. System (1) nach einem der Ansprüche 7 - 11, umfassend zwei Leitungswassertanks (11, 11') zur Bereitstellung von warmem Leitungswasser in zwei verschiedenen Leitungswassertanks nacheinander.

## Revendications

1. Procédé pour chauffer l'eau du robinet (15) d'un bâtiment d'une première température T₁ à une seconde température T₂, comprenant une étape de chauffage dans laquelle l'eau du robinet entrante est chauffée par la chaleur de condensation libérée par une pompe à chaleur (2) dans l'eau de chauffage (5) au niveau de son condenseur (3), et l'eau du robinet qui a été chauffée de cette manière est acheminée dans un réservoir d'eau du robinet (11) pour être acheminée encore en vue de son utilisation,
dans lequel
- l'eau du robinet est chauffée lors de ladite étape de chauffage avec la pompe à chaleur d'une manière telle que l'augmentation de température ΔT fournie entre l'eau chauffée et l'eau du robinet entrante correspond seulement à une partie de la différence de température totale ciblée T₂-T₁,
- ladite étape de chauffage est répétée en utilisant, comme eau du robinet entrante, l'eau du robinet qui a déjà été chauffée lors d'une étape de chauffage précédente et qui est acheminée depuis la partie inférieure du réservoir d'eau du robinet (11), et en renvoyant l'eau du robinet qui a été réchauffée de cette manière à la partie supérieure du réservoir d'eau du robinet de manière à déposer l'eau du robinet réchauffée sur l'eau du robinet qui a été réchauffée lors d'une étape de chauffage précédente, jusqu'à ce que pratiquement tout le volume d'eau contenu dans le réservoir d'eau du robinet soit de l'eau du robinet réchauffée,
- ladite étape de chauffage est répétée en continu jusqu'à ce que la température T₂ souhaitée d'eau du robinet ait été atteinte, et **caractérisé en ce que**
- lors de l'acheminement de l'eau du robinet pour son utilisation depuis le réservoir d'eau du robinet, elle est chauffée avec de l'eau chaude, qui est chauffée par la chaleur libérée par un gaz chaud (4) d'une pompe à chaleur, pour garantir une température suffisamment élevée de l'eau du robinet acheminée en vue de son utilisation; dans lequel l'eau du robinet entrante (15) et l'eau de chauffage (17) peuvent être chauffées avec la même pompe à chaleur.

2. Procédé selon la revendication 1, dans lequel l'augmentation de température ΔT fournie lors de l'étape de chauffage est 6-10 °C, de préférence approximativement de 8 °C.

3. Procédé selon la revendication 1 ou 2, dans lequel l'eau du robinet tiède qui a été chauffée avec l'eau chaude est mise en circulation jusqu'à un point d'usage d'eau du robinet (25) et renvoyée pour être chauffée avec l'eau chaude pour garantir un apport rapide d'eau du robinet tiède pour son utilisation.

4. Procédé selon l'une quelconque des revendications 1 à 3, dans lequel une pompe à chaleur de source terrestre (2) est utilisée comme pompe à chaleur.

5. Procédé selon l'une quelconque des revendications 1 à 4, dans lequel le réservoir d'eau du robinet utilisé est un réservoir (11) au diamètre intérieur de la section transversale horizontale de pas plus d'approximativement 800 mm, idéalement de pas plus d'approximativement 500 mm, et d'un volume d'approximativement 300 à 1000 litres.

6. Procédé selon l'une quelconque des revendications 1 à 5, dans lequel l'eau du robinet tiède est fournie par le procédé dans deux réservoirs d'eau du robinet (11, 11') différents l'un après l'autre.

7. Système (1) pour chauffer l'eau du robinet (15) d'un bâtiment d'une première température T₁ à une seconde température T₂, le système comprenant une pompe à chaleur (2), une circulation d'eau de chauffage (19), un échangeur de chaleur (6), une canalisation d'eau du robinet (7) et un réservoir d'eau du robinet (11), agencé pour chauffer l'eau du robinet entrante au niveau de l'échangeur de chaleur avec la chaleur de condensation libérée par la pompe à chaleur dans l'eau de chauffage (5) au niveau de son condenseur (3), et pour acheminer l'eau du robinet qui a été chauffée de cette manière dans le réservoir d'eau du robinet pour être acheminée encore en vue de son utilisation,
dans lequel
- la pompe à chaleur (2) est agencée pour fonctionner d'une manière telle que l'augmentation de température ΔT fournie entre l'eau chauffée et l'eau du robinet entrante correspond seulement à une partie de la différence de température totale ciblée T₂-T₁,
- le système est agencé pour répéter ladite étape de chauffage d'eau du robinet entrante en utilisant, comme eau du robinet entrante, l'eau du robinet qui a déjà été chauffée et qui est acheminée depuis la partie inférieure du réservoir d'eau du robinet (11), et en renvoyant l'eau du robinet qui a été réchauffée de cette manière à la partie supérieure du réservoir d'eau du robinet de manière à déposer l'eau du robinet réchauffée sur l'eau du robinet qui a été réchauffée lors d'une étape de chauffage précédente, jusqu'à ce que pratiquement tout le volume d'eau contenu dans le réservoir d'eau du robinet soit de l'eau du robinet réchauffée,
- le système étant agencé pour répéter en continu ladite étape de chauffage jusqu'à ce que la température T₂ souhaitée d'eau du robinet ait été atteinte, et que
- le système comprend en outre un réseau de canaux d'eau chaude (18) et un échangeur de chaleur à gaz chaud (4) d'une pompe à chaleur raccordé l'un à l'autre pour chauffer l'eau chaude (17) avec la chaleur libérée par l'échangeur de chaleur à gaz chaud, la canalisation d'eau du robinet (7) étant agencée pour acheminer l'eau du robinet à acheminer pour son utilisation depuis le réservoir d'eau du robinet en communication de transfert de chaleur avec l'eau chaude (17), pour garantir une température suffisamment élevée de l'eau du robinet acheminée pour son utilisation; dans lequel l'échangeur de chaleur à gaz chaud (4) peut être raccordé à la même pompe à chaleur (2) que le condenseur (3) qui libère la chaleur dans l'eau de chauffage.

8. Système (1) selon la revendication 7, dans lequel l'augmentation de température ΔT fournie lors d'une étape de chauffage est 6-10 °C, de préférence approximativement de 8 °C.

9. Système (1) selon la revendication 7 ou 8, dans lequel la canalisation d'eau du robinet (7, 19) est agencée pour faire circuler l'eau du robinet tiède jusqu'à un point d'usage d'eau du robinet (25) et la renvoyer en communication de transfert de chaleur avec l'eau chaude (17) pour garantir un apport rapide d'eau du robinet tiède pour son utilisation.

10. Système (1) selon l'une quelconque des revendications 7 à 9, dans lequel la pompe à chaleur est une pompe à chaleur de source terrestre (2).

11. Système (1) selon l'une quelconque des revendications 7 à 10, dans lequel le diamètre intérieur de la section transversale horizontale du réservoir d'eau du robinet (11) ne fait pas plus d'approximativement 800 mm, idéalement pas plus d'approximativement 500 mm, et son volume est d'approximativement 300 à 1000 litres.

12. Système (1) selon l'une quelconque des revendications 7 à 11, comprenant en outre deux réservoirs d'eau du robinet (11, 11') pour fournir l'eau du robinet tiède dans deux réservoirs d'eau du robinet différents l'un après l'autre.
